# EUROPEAN PATENT APPLICATION

(11) **EP 4 614 449 A1**
(43) Date of publication of application: **10.09.2025**
(21) Application number: 24214743.7
(22) Date of filing: 22.11.2024
(51) Int. Cl.: G06T 17/20

(54) **A METHOD FOR DECIMATION OF WATERTIGHT 3D POLIGONAL SURFACES FOR DATA REDUCTION AND A RECONSTRUCTION METHOD OF SUCH DECIMATED SURFACES**

(71) Applicant: Univerza v Mariboru, 2000 Maribor (SI)
(72) Inventor: Zalik, Borut, 2351 Kamnica (SI); Podgorelec, David, 2000 Maribor (SI); Repnik, Blaz, 2000 Maribor (SI)
(74) Representative: Patentni Biro AF d.o.o.

(57) **Abstract**

The invention is in the field of Computer Science and Computer-Aided Design. It relates to the process of removing (decimating) facets that define the watertight polygonal meshes approximating the surfaces of 3D geometric objects represented in a computer, in such a way that the removed facets can be reconstructed uniquely. The decimation process in this invention is based on the fact that the surfaces of 3D geometric objects must be watertight. Based on this information, it is shown that a large proportion of facets are redundant and can be removed, thus reducing the size of the file that stores the geometric object. The mesh reconstruction process then reconstructs the removed facets, ensuring the polygonal mesh becomes watertight again, with orientability guaranteed by considering Möbius' rule on the opposite orientation of the half-edges of neighbouring facets. The methods of decimation and reconstruction of the polygonal mesh are not reversed, i.e., they are asymmetric. The asymmetric processes are known to be more robust and resistant to potential hidden programming errors. They also allow for different implementations of the mesh decimation method. All previous methods dealing with the compression of polygonal meshes are symmetric, and any error occurring in either the decimation or reconstruction process prevents correct reconstructing of the polygonal mesh.

## Description

### Field of invention

The invention belongs to the fields of Computer Science and Computer Aided Design. It relates to a process of decimation (removing) the facets that define the watertight surface of a 3D geometric object represented in a computer so that the removed facets can be reconstructed uniquely. The invention reduces the amount of data needed to store the surfaces of geometric objects without requiring a new, specific storage format. The invention also relates to a reconstruction method of such decimated data.

### Background of the invention

Computer-Aided Design (CAD) and Computer-Aided Manufacturing (CAM) have replaced completely traditional engineering processes. With current 3D printers, the ability to produce 3D geometric models is now given to many users. Various programming solutions are available for creating 3D geometric models and for generating the sequence of commands for a specific 3D printer. Many of these programming solutions are open-source and available freely, encouraging the users to venture into the world of 3D geometric modelling and 3D printing. Unfortunately, the capabilities of individual programming solutions, both commercial and freeware, may vary considerably; some tasks are performed more easily in one programming solution, others in another one. This is why users often exchange data files containing 3D geometric objects either locally or over the internet. Unfortunately, this exchange of data is frequently tedious because geometric modellers in these programming solutions support different domains of geometric objects that they can represent. This is why neutral data exchange formats, such as the Initial Graphics Exchange Specification (IGES) and the international Standard for the Exchange of Product model data (STEP) (ISO 10303) have been proposed for this task. STEP, for example, is the most comprehensive standard within ISO and this is why it is very challenging to implement it entirely. This was the reason why many commercial, and especially freely available programming solutions have sought an alternative. This alternative interpolates the surface of the geometric model using a polygonal mesh of facets, where each facet is represented by a sequence of coplanar vertices that form a convex polygon. Facets are most often triangles, less often quadrilaterals, while facets with a larger number of vertices are very uncommon in geometric modelling. Formats for storing polygonal meshes consisting of facets are easy to understand and implement and are, therefore, very commonly used. The most common formats for storing facets include STL (STereoLithography File Format), 3MF (3D Manufacturing Format), AMF (Additive Manufacturing File Format), OBJ (Wavefront File Format), PLY (Polygon File Format), and others. Unfortunately, to achieve a reasonable smoothness of curved surfaces, many facets are needed, which results in large files. In addition, such a mesh must also satisfy the conditions of well-formed surfaces, as defined in classical geometric modelling books (C. M. Hoffman, Geometric and Solid Modeling: An Introduction, Morgan Kaufman, 1989; M. E. Mortenson, Geometric Modeling, John Wiley and Sons, 1985; M. Mäntylä, Introduction to Solid Modeling, Computer Science Press, 1988). The surface must be closed, orientable, non-self-intersecting, bounding, and connected. A closed surface is also referred to as a watertight surface in engineering vocabulary.

In the past, many methods have been developed to reduce the amount of data needed to present polygonal meshes consisting of facets, which will be described in the Prior art section. These methods are based on a set of instructions that allow the decoder to reconstruct a polygonal mesh. Therefore, each of these methods introduces its own specific file format, making them non-interoperable with each other and incompatible with widely accepted file formats. The encoder and decoder of these methods must work consistently, and any error in the encoding or decoding phase would completely prevent the reconstruction of the initial polygonal mesh. In addition, their implementation and the removal of hidden bugs are challenging, as geometric models are often represented by millions of triangles, and hidden bugs are very likely to occur. All this limits the applicability of these methods, and consequently, they have never been adopted in engineering practice.

The technical problem solved by this invention is, therefore, to design a data reduction method (referred to as an encoder) that would use the initial file format to store the reduced data, and a method (referred to as a decoder) that would reconstruct completely the polygonal surface of a 3D geometric object from the reduced data. In addition, encoder and decoder should be simple from the programming perspective and as robust as possible. Robustness would be achieved by completely decoupling the operation of them.

### Prior art

The description of a 3D geometric object's surface, represented by a polygonal mesh, consists of two parts: the coordinates of vertices and the information about which vertices are connected to form facets of the mesh. In engineering terminology, the coordinates of the vertices are referred to as geometry, and the connectivity of the vertices as topology. The best approximation of the surface is achieved when the facets are triangles, forming a Triangular Irregular Network (TIN). Therefore, most of the approaches described below work with TINs.

Patent US6366279B1 relates to 3D geometric models represented by TIN. The method begins by forming a dual graph of the TIN by computing a centroid for each triangle. These centroids are then connected to adjacent centroids, resulting in a Voronoi diagram. Within this diagram, the method identifies cycles, which are represented as sequences of line segments. The cycles are then opened, and a binary tree is constructed on them. Since the binary tree requires less memory space than the initial TIN, compression is achieved.

Patent US6167159 discloses a two-step compression method for TIN. The authors first assign a degree to each vertex based on the number of edges that meet at the given vertex. For parts of the TIN that are not watertight, additional dummy vertices are inserted to create dummy triangles. The method then processes the TIN's topology and geometry separately. For this, two lists are constructed: the first stores the coordinates of the vertices, while the second contains commands for on how to reconstruct the topology. Four commands are used (add, add dummy, split, and merge). These two lists are then compressed separately using classical data compression algorithms. The method was also presented and published at the scientific conference (C. Touma, C. Gotsman, Triangle Mesh Compression, Graphics Interface '98, Vancouver, Canada, 1998, pp. 26-34)*.*

Patent US6668091 relates to the progressive encoding of 3D geometric objects represented by TINs for display within MPEG-4 SNHC (Motion Picture Expert Group-4 Synthetic and Natural Hybrid Coding), VRML (Virtual Reality Modeling Language), and other dynamic environments. The invention consists of four steps: (a) partitioning the TIN into one or more connected components, (b) constructing separate vertex and triangle graphs for each connected component, (c) dividing these graphs into sub-graphs that can be encoded independently, and (d) encoding the vertices and attribute data.

The invention disclosed in patent JP2013507701 explores the properties of CAD models to replicate certain features within a geometric object. The method first divides the object into connected components, which are then grouped into clusters. Each cluster is represented by a kd-tree, which is then encoded.

Patent US 10950042 describes the generation of a bit stream containing the sequence of commands for visiting vertices in a TIN. This method focuses on compressing the coordinates of the vertices, which is not the objective of our invention. Similarly, patent US5870094 by F. Derring addresses the compression of attribute data for individual triangles in a triangle strip, such as position, colour, and normal. This invention is limited to triangle strips rather than entire TINs. Patent application US5825369A proposes a method for compressing polygons by triangulating them first. The invention is limited to 2D TINs.

In the continuation, methods for TIN compression available in the literature are described.

Gumhold and Strasser introduced a method based on the concept of a cut-border, presented in their paper Real-Time Compression of Triangle Mesh Connectivity, published in the Proceedings of the 25th Annual Conference on Computer Graphics and Interactive Techniques (New York, NY, USA, 1998), SIGGRAPH '98, Association for Computing Machinery, pp. 133-140*.* The cut-border divides TIN into two parts: the already encoded part and the remainder. At each step, a new triangle is added to the boundary. They identified seven possible cases for this task, which is why the method requires seven instructions.

J. Rossignac presented an algorithm that processes TINs using a method called edge-breaking, detailed in his paper Edgebreaker: Connectivity Compression for Triangle Meshes, published in IEEE Transactions on Visualization and Computer Graphics, 5(1), 1999, pp. 47-61*.* When an edge is removed, the TIN is decomposed into regions, which may share boundary vertices. The edge-breaking process is controlled by five commands.

In the paper Valence-driven connectivity encoding for 3D meshes, Computer Graphics Forum 20(3), 2001, 480-489, authors P. Alliez and M. Desbrun upgraded the method of Touma and Gotsman described earlier. They introduced a heuristic that selects the vertex with the smallest number of free edges, where free edges are edges that have not yet been used, as the next vertex.

The paper An Edgebreaker & code-mode based connectivity compression for triangular meshes, presented at the 2nd International Conference on Advanced Computer Control, 2, 2010, 96-101, by L. Ying, H. Zhongming, D. Mingli and D. Dagao, proposed improvements to J. Rosignac's Edgebreaker method by introducing a more efficient encoding technique to the sequence of symbols generated by Edgebreaker.

The paper TFAN: A low complexity 3D mesh compression algorithm, published by K. Mamou, T. Zaharia, and F. Preteux in Computer Animation and Virtual Worlds, 20(2-3), 343-354, 2009, can process TINs in linear time with respect to the number of vertices, while achieving a compression ratio competitive with other approaches.

The paper Delphi: Geometry-based connectivity prediction in triangle mesh compression, published in The Visual Computer, 20(8), 2004, 507-520, by V. Coors and J. Rossignac, introduced a completely new approach. Prior to this publication, topology and geometry were treated separately. Delphi, however, predicts how triangles are connected in a TIN by analysing the spatial relations between the vertices and the interior angles of triangles. Consequently, the method achieves better compression ratios than previous approaches.

H. Lee, P. Alliez and M. Debrun, in their paper Angle-analyzer: A triangle-quad mesh codec, Computer Graphics Forum 21(3), 2002, 383-392, introduced a compression method for polygonal meshes that may contain both triangles and quadrilaterals. This method exploits the properties of the interior angles of adjacent triangles and quadrilaterals for prediction. The encoding of facets with a higher encoding cost is postponed to reduce to amount of compression data. It is hoped that the postponed facets will be encoded later more efficiently.

A similar idea was proposed by F. Kälberer, K. Polthier, U. Reitebuch, and M. Wardetzky in the paper FreeLence - Coding with free valences, published in Computer Graphics Forum 24(3), 2005, 469-478. The authors prioritise encoding the vertex with the smallest valence, defined as the number of free edges meeting at this vertex.

J. Peng and C.-C. Jay Kuo in the paper Geometry-guided progressive lossless 3D mesh coding with octree (CT) decomposition, ACM Transactions on Graphics, 24(3), 2005, 609-616*,* proposed a method that first classifies the TINs vertices into a unit cell and then begins constructing an octree. Cells containing more than one vertex are subdivided. At each subdivision, the method encodes local changes in both geometry and topology. The position of the vertices is thus determined relative to the position of the cell in the octree. The topological information is also mapped to the relationships between the vertices and the octree nodes. As the authors have shown, the use of the octree is advantageous compared to the kd-tree.

P. Marais, J. Gain and D. Shreiner in the paper Distance-ranked connectivity compression of triangle meshes, Computer Graphics Forum, 26(4), 2007, 813-823*,* suggested treating the vertices of a TIN as 3D points and compressing them first using point-cloud compression methods. By exploiting information about the positions of the vertices, they were able to compress the topology more efficiently. The method uses an enhanced Edgebreaker approach to predict the connectivity of vertices in the TIN.

In the paper Toward real-time and efficient compression of human time-varying meshes, IEEE Transactions on Circuits and Systems for Video Technology, 24 (12), 2014, 2099-2116 written by A. Doumanoglou, D. S. Alexiadis, D. Zarpalas, and P. Daras, an enhancement to the TFAN algorithm was proposed. This enhancement uses the distances between previously compressed vertices to predict, which vertex will be prioritised for connection to the TIN.

J. Dvořák, Z. Káčereková, P. Vanêček, and L. Váša, in their paper *Priority-based encoding of triangle mesh connectivity for a known geometry, Computer Graphics Forum, 42(1), 2023, 60-71,* improved the prediction of vertex connectivity in a TIN by replacing a predefined traversal through the TIN with a traversal based on a priority queue. The vertex with the highest probability of being included in the TIN is placed at the top of the queue. To achieve this, they introduced a new metric to evaluate the quality of the prediction.

A comprehensive overview of the TIN compression methods was provided by J. Peng, C-S Kim, C-CJ Kuo in the paper Technologies for 3D mesh compression: A survey, Journal of Visual Communication and Image Representation, 16(6), 2005, 688-733*.*

All the described methods have one key objective: to compress the TIN as effectively as possible. For this reason, each method introduces specific data formats to store the compressed data. However, these formats are not interoperable with existing standards, the implementation of these methods is demanding, and the encoder and decoder are symmetric, which reduces the robustness and reliability of these approaches. Consequently, despite achieving good compression results, these solutions have never been adopted in engineering practice. The proposed solution, however, differs completely from all the methods described above.

### Description of the solution to the technical problem

The aim of the invention is to provide a method for reducing the file size which stores the surfaces described by watertight polygonal meshes consisting of facets. This is achieved by removing facets that can be reconstructed unambiguously by the reconstruction method, ensuring that the reconstructed surface is watertight and that the facets are oriented correctly. In addition to watertightness and the orientation of facets, it is assumed that all other conditions for well-formed surfaces are satisfied in the original surface. The technical problem is solved by the methods defined in the independent claim, while the dependent claims define preferred embodiments of the invention. None of the referenced documents discloses a method that includes the same steps or arranges them in the order described below for reducing the needed amount of data and to reconstruct the 3D watertight surfaces represented by polygonal meshes.

When compressing data in other domains (e.g., digital video or digital audio), two approaches can be used to reduce file size and achieve a more compact representation. The first is the use of lossless data compression methods, which reduce the amount of data by removing redundancies in data. The second approach improves the compactness of the compressed data by omitting information that is imperceptible to the human sensory system. This is referred to as lossy compression. In digital video and audio, both methods are applied sequentially: first, data loss is introduced, and what remains is then encoded using lossless compression. For geometric objects intended for computer-aided manufacturing, any loss of data is unacceptable, as it could affect the smoothness or even the shape of the surface. This is why the proposed invention focuses on removing (or decimating) those facets that can be uniquely and unambiguously reconstructed from the remaining facets.

The invention relates to both the process of decimating a polygonal mesh through controlled facet removal and the reconstruction process, which fully restores the removed facets using the remaining information after decimation. Together, these two processes form a cohesive system for data compression (encoding) and data reconstruction (decoding). The two processes are inherently interdependent, analogous to a key and a lock or a socket and a plug.

The essence of the data decimation process, applied to the polygonal mesh that defines the watertight surface of a 3D geometric object, is to omit individual facets while reconstructing the original surface from the remaining facets. This is achieved by omitting any facet whose edges are fully defined by the edges of adjacent facets.

The steps of the data decimation process, which makes the representation more compact and thus reduces the storage size of surfaces described by watertight polygonal meshes composed of facets, are as follows in a preferred embodiment of the invention:
a) reading the watertight polygonal surface of a 3D geometric object, represented by facets, from existing data formats such as STL, OBJ, AMF, 3MF, PLY, and others using a suitable reader for these formats,
b) identifying and inserting each facet into a data structure, such as a stack, a queue, a hash table, or a search tree,
c) inserting the edges of facets into a searching data structure,
d) for each edge of the polygonal mesh, the indices of the two facets sharing that edge are determined, wherein the index refers to the consecutive number assigned to the facet when it is inserted into the data structure,
e) each facet is associated with a three-state flag, with the values denoted as, for example:

- *Unvisited,*
- *Preserved,* and
- *Removed,*
where the flag is initialised to *Unvisited,*
f) processing each facet with the flag set to *Unvisited,*
g) obtaining information about the flag status of all adjacent facets,
h) if all the flags of adjacent facets are in the *Unvisited* or *Preserved* state and none of the facet edges form another facet with its adjacent edges that is not part of the surface, then set the facet flag to the *Removed* state; otherwise, set it to the *Preserved* state,
i) repeating steps g) and h) until a facet with the flag set to *Unvisited* exists,
j) writing the data about the polygonal mesh to the output file, excluding the facets with the flag set to *Removed,* using an appropriate writer,
k) preferably adding an extension to the file, such as .NWT (Non-Water-Tight), to indicate that it is a file with decimated facets.

A facet refers to a coplanar convex polygon. In this invention, facets are typically triangles, with occasional rectangles, while facets with a higher number of vertices are uncommon in engineering applications. In a preferred embodiment of this invention, the facets are triangles.

The steps in the reconstruction process of a decimated polygonal mesh, generated by the decimation process described above, are as follows:
a) selecting a file with the extension .NWT and removing this extension so that only the file's original extension remains, such as STL, OBJ, AMF, 3MF, or PLY,
b) reading the file in a format such as STL, OBJ, AMF, 3MF, or PLY using an appropriate reader for these data formats to obtain a list of vertices and a list of facets. Associating each vertex and each facet with a consecutive index,
c) inserting the vertices of the polygonal mesh into an arbitrary data structure,
d) inserting the facets of the polygonal mesh into an arbitrary data structure,
e) extracting all edges bounding the facets and inserting them into an arbitrary data structure,
f) associating each edge with two flags, denoted as *F1* and *F2*, where each flag can take one of two values, denoted as, for example:
   - flag *F1*:
      - the value *TwoFacets* indicates that the edge shares two facets,
      - the value *OneFacets* denots that the edge bounds only one facet,
   - flag *F2*:
      - the value *Visited* indicates that the edge was visited during the facet reconstruction process,
      - the value *Unvisited* denotes that the edge was not yet visited during the facet reconstruction process,
g) verifying all edges in the data structure to determine whether each edge belongs to two facets or only one. In the first case, *F1* is set to *TwoFacets*; otherwise, it is set to *OneFacet,*
h) setting the flags *F2* of all edges to *Unvisited,*
i) selecting an arbitrary edge *e_{i,j}* defined by vertices *vᵢ* and *vⱼ* and having the flag *F1* set to *OneFacet,* storing vertex *vⱼ* as vertex *v_{end}*, and setting the flag *F2* of this edge to the value *Visited,*
j) vertices *vⱼ* in *vᵢ* become the first two vertices of the reconstructed facet and are stored in the auxiliary list *L*,
k) positioning at vertex *vᵢ* and determining all edges originating from this vertex that have flag *F1* set to *OneFacet* and flag *F2* to *Unvisited,*
l) finding the edge e*_{i,k}*, which makes the smallest angle with the edge *e_{i,j}* in the counter-clockwise direction,
m) in case facets are not triangles, evaluating whether the vertex *vₖ* is coplanar with the previously accepted vertices,
n) if the vertex is not coplanar, returning to step k); otherwise, the vertex *vₖ* is accepted and the edge *e_{i,k}* becomes the edge *e_{i,j}*,
o) returning to step k) until *vₖ* is different than *v_{end}*, which indicates that this facet has been reconstructed,
p) the reconstructed facet is determined by the vertices from the list *L*,
q) setting flag *F1* to *TwoFacets* for all edges determined by vertices in the list *L* and set all *F2* flags of these edges that were set to *Visited* to *Unvisited,*
r) determining the correct orientation of the reconstructed facet and inserting the facets into the facet data structure,
s) returning to step i) as long as there is an edge with flag *F1* set to the value *OneFacet,*
t) storing the reconstructed polygonal surface in the output file using an appropriate writer.

It is clearly visible that the steps of polygonal mesh decimation and reconstruction differ significantly, as the encoder and decoder perform different tasks. The encoder identifies which facets can be removed, while the decoder determines which facets are missing and need to be reconstructed. The two processes are asymmetric, which adds additional value to the invention. The asymmetry of the encoder and decoder increases the robustness and reliability of the method. Specifically, the decimation can be implemented in different ways, and consequently, the results of the decimation may also vary. Despite this, the reconstruction process always reconstructs the polygonal mesh by adding the missing facets, ensuring that the restored polygonal mesh contains the same facets as the original surface.

The invention, i.e., the combination of both processes, reduces significantly (on average by almost half) the amount of data needed to describe the polygonal mesh and offers three important advantages over existing methods:
- The invention does not introduce a new specific file format; instead, the output format of the proposed method is the same as the input format. For example, if the polygonal network of the surface of a 3D geometric object is stored in the STL format, the presented method will also output the geometric object in STL format. This ensures full interoperability of the proposed method with existing, widely accepted and commonly used data formats.
- The implementation of decimation and reconstruction methods for a watertight polygonal surface is straightforward, allowing any hidden programming errors to be detected and resolved quickly.
- The decimation and reconstruction processes are conceptually decoupled, which further facilitates the elimination of potential programming errors and enhances the robustness of the implementation. This decoupling ensures that the implementation of the decimation process is not linked directly to the implementation of the reconstruction process.

The use of this invention is relevant to several areas where 3D geometric objects, with surfaces described by polygonal meshes consisting of facets, are stored or transmitted. Examples include CAD/CAM systems, 3D printing, cultural heritage data, geographic information systems (GIS), 3D WEB applications, and elsewhere.

The invention is further described by a flow diagram and an exemplary embodiment, which are shown in Figures:
Figure 1: Placing decimation a) and reconstruction b) processes in the data processing pipeline.
Figure 2: A detail of a watertight polygonal mesh with triangular facets.
Figure 3: Flowchart of the decimation process.
Figure 4: Flowchart of the reconstruction process.
Figure 5: A missing facet in the input polygonal mesh.
Figure 6: Selection of the next edge in the facet reconstruction process.
Figure 7: An example of a geometric object whose surface is approximated by a polygonal network with triangular facets.
Figure 8: A result of the decimation process.
Figure 9: Zoom-in of the decimated polygonal mesh.

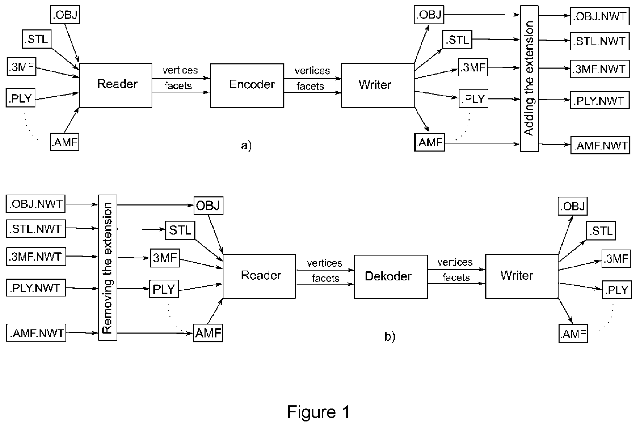

Figure 1a shows the data pipeline of the polygon mesh decimation process. The reader obtains the sequences of vertices and facets of the watertight polygonal surface of a 3D geometric object from the file in the chosen file format. The decimation process removes those facets that the reconstruction process can restore uniquely. The remaining data is then written by the writer in the same format as it was read by the reader. The resulting file is renamed by adding the extension .NWT to indicate to the user that the polygonal surface in the file is not watertight and that the missing facets need to be restored. A similar situation is shown in Figure 1b. This time, the polygon mesh reconstruction process accepts a file with a .NWT extension, which contains a non-watertight polygonal surface. It removes the .NWT extension, and then the reader reads the file in the appropriate format. The reconstruction process then reconstructs the missing facets and writes the result in the same format as initially used by the reader. The writer could also write the data in another supported format. In Figure 1, we provide examples of formats such as OBJ, STL, 3MF, PLY, and AMF, but the reader and the writer could work with other formats as well, as the different formats and the procedures for reading and writing them are not the subject of the present invention.

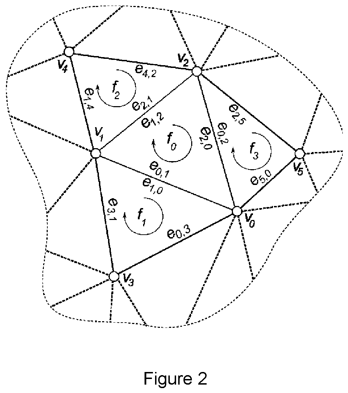

Figure 2 shows a detail of the polygonal surface of a geometric object in the most common case, where the facets are triangles. Facet *f₀* has adjacent facets (*f₁, f₂,* and *f₃*) along all its edges, so this part of the surface is watertight. Each of these three facets shares an edge with *f₀*, which is represented with two half-edges oriented in the opposite directions. For example, facets and *f₂* share an edge connecting vertices *v₁* and *v₂.* This edge is represented by the half-edge *e_{1,2}* in facet *f₀* and by the half-edge *e_{2,1}* in facet *f₂*. The so-called Möbius rule states that if all the half-edge pairs in the polygonal surface have opposite directions, then the surface is orientable. Orientability and watertightness are two requirements of the well-formed polygonal surface that are lost during the decimation process phase and must, therefore, be restored. The well-formed surfaces were explained in Section Background of the invention.

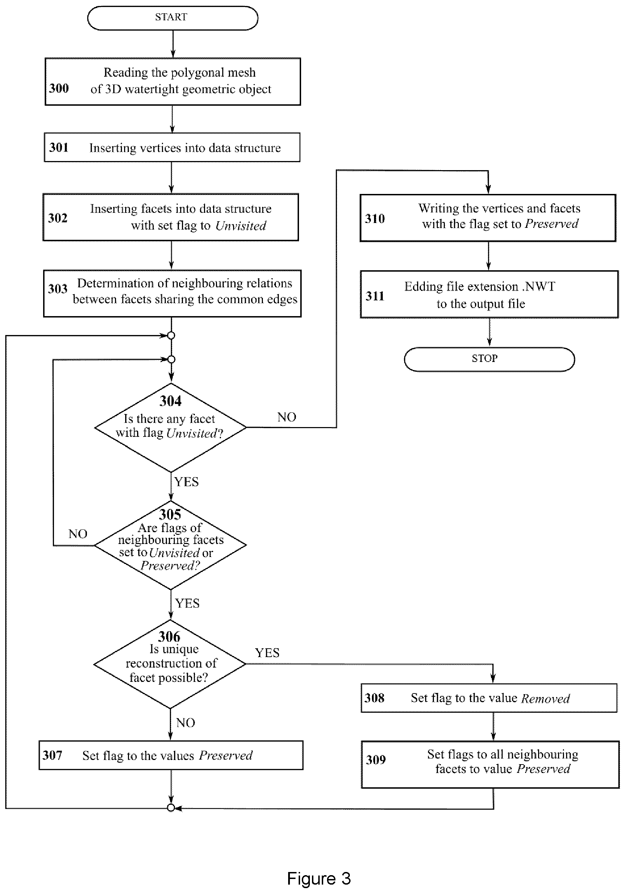

An embodiment of the invention is explained in two parts. In the first part, the process of polygon mesh decimation is explained with the help of Figures 1a, 2, and 3. Recall that the goal of this process is to remove facets from the polygonal mesh that can be reconstructed uniquely. The decimation process involves the following steps:
a) A file storing the polygonal mesh of a surface in one of the existing formats for describing polygon meshes, such as STL, OBJ, AMF, 3MF, or PLY, is selected and read by an appropriate reader (block **300**).
b) As shown in Figure 1, the reader provides the sequence of vertex coordinates, which are in block **301** inserted into a linear, random-access data structure, where the position of each vertex corresponds to its index.
c) Block **302** accepts a sequence of facets (triangles in the concrete example) and inserts them into the data structure. All facets are assigned a flag with the initial value *Unvisited.*
d) For each facet, the information about the neighbouring facets with which it shares common edges is established in block **303.** For example, facet *f₀* in Figure 2 has information that the neighbouring facet across edge *e_{1,0}* is facet *f₁*, across edge *e_{1,2}* is facet *f₂,* and across edge *e_{0,2}* is facet *f₃*.
e) The process then checks in block **304** whether there is a facet with the flag set to the value *Unvisited.* Let us assume that the facet *f₀* in Figure 2 has been selected.
f) For the facet with the flag set to the value *Unvisited* in block **305,** all flags in the neighbouring facets are checked using the established relations from step d). If the states of all flags are not *Unvisited* or *Preserved,* the procedure returns to step e), otherwise it proceeds with the next step.
g) In block **306,** it is checked whether a unique facet reconstruction is possible. In extremely rare cases, it may be possible to reconstruct two different facets from the facet edges, one of which is not part of the surface. In such cases, the flag of this facet is set to the value *Preserved* in block **307.**
h) The flag of the facet that can be reconstructed uniquely is set to the value *Removed* in block **308.** For instance, the flag of facet *f₀* in Figure 2 is marked with this value.
i) All neighbouring facets of the removed facets must be preserved. This is why the flags of all these facets are set to the value *Preserved* in block **309.** Facets *f₁*, *f₂,* and *f₃* in Figure 2 must stay and their flags are therefore set to the value *Preserved.*
j) These steps are repeated until it is determined in block **304** that all facet flags are either in the state *Removed* or *Preserved.* In such a case, the method continues to the next step (step k)).
k) Data are stored in the output file in block **310** in the same format as the input (e.g., STL, OBJ, AMF, 3MF, or PLY) using the appropriate writer (see Figure 1a). The writer receives only facets with their flags set to value *Preserved.*
l) In block **311,** the output file is renamed by appending the file extension .NWT. The decimation process then terminates.

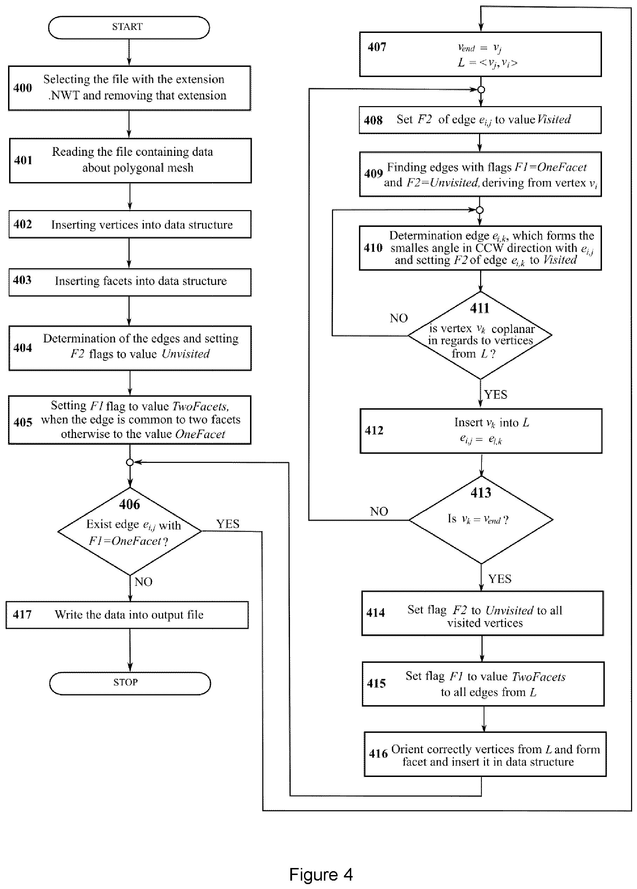

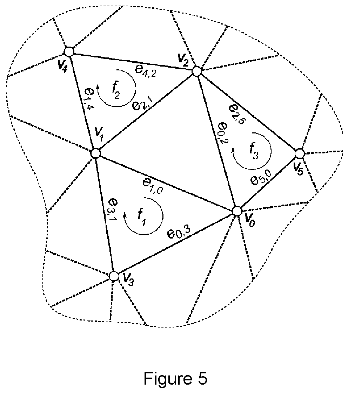

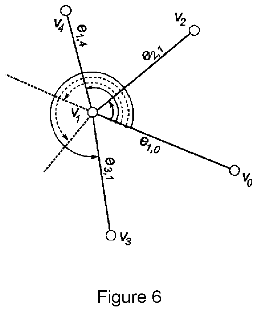

The method of reconstructing decimated facets of a polygonal mesh is explained by Figures 1b, 4, 5, and 6 using the following steps:
a) In block **400,** a file with the extension .NWT is selected, and this extension is removed. As a result, the file retains, for example, with one of the following extensions: STL, OBJ, AMF, 3MF, or PLY.
b) The file containing the decimated polygonal mesh is read in block **401** using the appropriate reader (see Figure 1b).
c) The vertices (block **402**) and the facets (block **403**) are inserted into suitable data structures. A part of such a polygonal mesh, where the facets are triangles, is shown in Figure 5. It can be observed that facets *f₁*, *f₂,* and *f₃* have been read, but facet *f₀* is missing as it was removed during the decimation process, as explained previously.
d) The polygonal mesh reconstruction process inserts all the edges of facets into a suitable search data structure (e.g., a search tree or a hash table). It assigns two flags to each edge: the *F1* flag in block **405** is set to *TwoFaces* if the edge already belongs to two facets, or to *OneFacet* otherwise. In the example in Figure 5, the edges *e_{1,0}*, *e_{2,1}* and *e_{0,2}* have *F1* set to *OneFacet.* The second flag, *F2*, is assigned to all edges in block **404** with the initial value *Unvisited.*
e) The main part of the method begins at block **406,** where it is checked whether there is any edge with the flag *F1* set to the value *OneFacet,* indicating a non-watertight part of the surface. If such an edge *e_{i,j}* exists, the method proceeds to block **407;** otherwise, it continues in block **417.**
f) In block **407,** the vertex *vⱼ* is initially stored in an auxiliary variable, *v_{end}.* When the reconstruction process encounters a vertex identical to *v_{end},* the reconstruction of the facet terminates. Let us assume that the method has found the initial edge *e_{1,0}*, and therefore *v_{end}* = *0* (see Figure 5). The method inserts the first two vertices into the auxiliary list L. In our example, L= <0, 1 >. After that, the flag *F2* of the initial edge (i.e., *e_{1,0}*) is marked as *Visited* in block **408.**
g) In block **409,** the method selects all the edges that enclose vertex *vᵢ* (vertex *v₁* in the example in Figure 5). The angles between edge *e_{i,j}* and the other edges meeting at vertex *vᵢ* are calculated, using only the edges with the flag *F1* set to *OneFacet* and the F2 flag set to *Unvisited.* The edge *e_{i,k}* with the smallest angle is selected. As shown in the example in Figure 6, the edges *e_{1,0}* (the reference edge), *e_{2,1}*, *e_{4,1}*, *e_{3,1}*, and the two edges of the triangles marked with dashed lines (which are not part of the example) meet at vertex *v₁.* In the example in Figure 6, edge *e_{2,1}* is selected. The *F2* flag of the selected edge is set to *Visited* in block **410.**
h) Block **411** is executed only for facets that are not triangles. It checks whether vertex *vₖ* is coplanar with the vertices in *L*. If it is not, the method returns to the second part of step g) (to block **410**) to find a new appropriate edge, as the current edge *e_{i,k}* already has the *F2* flag set to *Visited.*
i) In block **412**, vertex *vₖ* is added to the auxiliary list *L*, and the next reference edge *e_{i,j}* becomes the accepted edge *e_{i.k}*.
j) It is checked in block **413** whether the final vertex of the facet has been reached. If not, we proceed to the second part of step g) (to block **408**); otherwise, in blocks **414,** the *F2* flags of all visited edges are set to *Unvisited,* and in block **415,** the *F1* flag is set to *TwoFacets* for those edges that have become members of the restored facet.
k) In block **416,** it is ensured that the orientation of vertices in the auxiliary list *L* is correct, and afterwards, the reconstructed facet is inserted into the data structure that stores facets.
l) The method returns to block **406** (step e)) while an edge with the *F1* flag set to *OneFacet* exists.
m) The completely reconstructed polygonal surface is then written to the file in block **417** by an appropriate writer. Afterwards, the reconstruction process terminates.

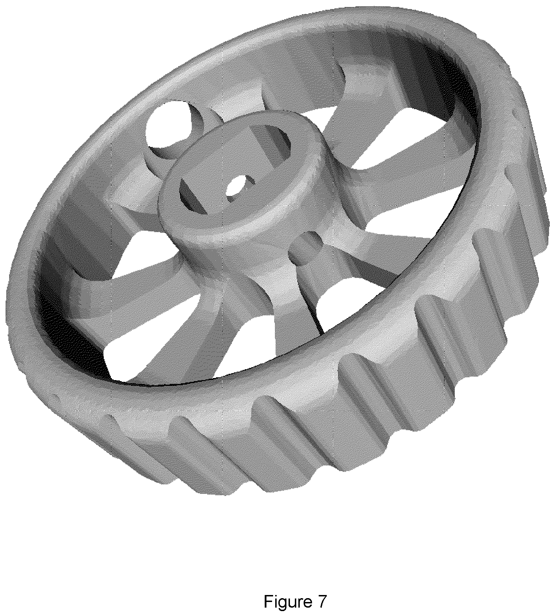

A concrete model of a geometric object, represented by a polygonal mesh with triangular facets, is shown in Figure 7. It was stored in the STL format, which is extremely popular among users and deals only with triangular polygonal meshes. Each triangle is stored independently as follows:
- 12 bytes for normal vector of a triangle, represented by three floating-point numbers,
- 12 bytes for the first triangle's vertex coordinates, represented by three floating-point numbers,
- 12 bytes for the second triangle's vertex coordinates, represented by three floating-point numbers,
- 12 bytes for the third triangle's vertex coordinates, represented by three floating-point numbers,
- 2 bytes for the attribute data, which, according to the specification, it is set to the value 0.

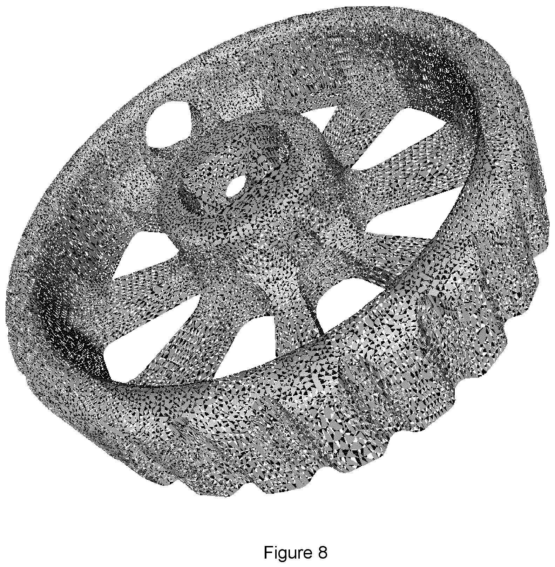

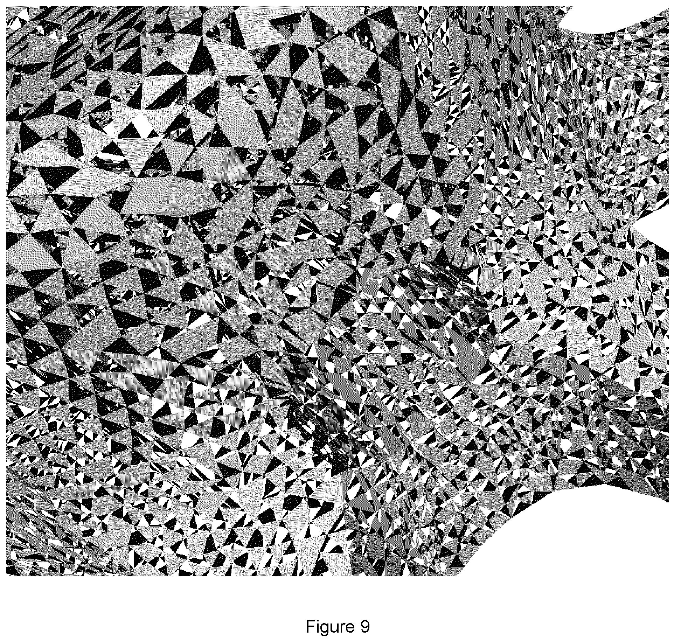

In this way, 50 bytes are needed to store each triangle. The geometric model from Figure 7 has 89,512 triangles, and the size of the STL file is 4,475,684 bytes, including 80 bytes reserved for possible comments and four bytes for specifying the number of triangles. This STL file can be further compressed using a program like ZIP, reducing it to 2,656,475 bytes by using a default parameter. After applying the decimation process according to our invention, the decimated polygonal mesh of the geometric model is shown in Figure 8 (the complete decimated model) and Figure 9 (a detail of the model). The polygonal mesh contains 50,015 triangles, which is more than 40% smaller. The size of the .STL.NWT file is accordingly reduced to 2,600,834 bytes. If this file is further compressed using the ZIP program with the same default parameters, the file size is reduced to 1,282,354 bytes.

## Claims

1. A process for decimation of watertight surfaces of 3D geometric objects, configured to reduce the amount of data, wherein the surfaces of 3D objects are described as watertight polygonal meshes consisting of facets, said process **characterised by** comprising a step of elimination or deletion of each facet whose edges remain defined by the edges of neighbouring facets, while preserving the original file format for storing the remaining mesh.

2. The process for decimation of watertight surfaces of 3D geometric objects for reducing the amount of data according to claim 1, **characterised in that** the process comprises the following steps:
a) reading facets of a watertight polygonal surface from existing data formats, such as STL, OBJ, AMF, 3MF, PLY, using an appropriate reader for these formats,
b) identification and insertion of each facet into an arbitrary data structure, such as a stack, queue, hash table, or any type of search tree,
c) determining edges of the facets, identifying these edges, and storing them in an arbitrary data structure,
d) assigning to each edge the information about the two facets (their indices) that share the edge,
e) assigning a three-state flag to each facet, denoted as, for example:
i. *Unvisited,*
ii. *Preserved,*
iii. *Removed,*
f) initialize the three-state flag to value *Unvisited,*
g) processing each facet having the flag with the value *Unvisited,*
h) acquiring information about the flags of neighbouring facets, which are accessible through the edges of the processed facet,
i) if all the flags of the neighbouring facets are in the *Unvisited* or *Preserved* state, and none of the edges of the processed facet, along with its neighbouring edges, form another facet that is not part of the polygonal mesh, then the facet's flag is set to *Removed*; otherwise, it is set to *Preserved,*
j) repeating steps h), and i) until no facet exists with the flag value set to *Unvisited,*
k) storing the information about the decimated polygonal mesh in an output file using an appropriate writer, omitting the facets with the flag set to *Removed.*

3. The process for decimation of watertight surfaces of 3D geometric objects, for reducing the amount of data according to claim 2, which, after step k, further comprises a step l) of adding an extension to the file, such as .NWT (Non-WaterTight), to indicate that the file comprises a decimated polygonal mesh.

4. The process for decimation of watertight surfaces of 3D geometric objects for reducing the amount of data according to claims 2 or 3, wherein only the facets marked with the *Preserved* flag are written to the output file using an appropriate writer.

5. The process for decimation of watertight surfaces of 3D geometric objects for reducing the amount of data as per any of the previous claims, wherein the facets are triangles or quadrilaterals.

6. A process of reconstructing a 3D geometric surface, represented by a polygonal mesh obtained through the decimation process according to any of the preceding claims, wherein the polygonal mesh is reconstructed to consist of facets that form a watertight and orientable surface, **characterised in that** the process of reconstructing comprises the following steps:
a) selecting a file with the .NWT extension and remove this extension, leaving only the original extension, such as STL, OBJ, AMF, 3MF, or PLY,
b) reading a file in formats such as STL, OBJ, AMF, 3MF, or PLY using an appropriate reader for these formats to obtain a list of facets and vertices associated with those facets,
c) inserting the vertices of the polygonal mesh into an arbitrary data structure that supports random access, where the position of each vertex in the structure corresponds to its index,
d) inserting the facets into an arbitrary data structure, such as a stack, queue, hash table, or any type of search tree, and associating each facet with a unique index,
e) extracting the edges from the facets and inserting them into an arbitrary data structure, such as a stack, queue, hash table, or any type of search tree, wherein the edges are defined by indices that point to pairs of vertices in the data structure, which was formed in step c),
f) allocating two flags, *F1* and *F2*, to each edge, where each flag can take one of two possible values denoted as:
a. *F1* flag:
i. *TwoFacets*: the edge is already shared by two facets,
ii. *OneFacet*: the edge bounds only one facet,
b. *F2* flag:
i. *Visited*: the edge has already been used during the reconstruction of the current facet,
ii. *Unvisited*: the edge has not yet been used during the reconstruction process of the current facet,
g) verifying each edge to determine whether it belongs to two different facets, wherein in case this is true, the *F1* flag is set to the value *TwoFacets*; otherwise the *F1* flag is set to the value *OneFacet,*
h) setting all *F2* flags to the value *Unvisited,*
i) selecting an arbitrary edge *e_{i,j}*, determined by vertices *vᵢ* and *vⱼ,* with the *F1* flag set to *OneFacet.* The vertex *vⱼ* is stored in the temporary vertex *v_{end}*, while the *F2* flag of this edge is set to *Visited,*
j) vertices *vⱼ* and *vᵢ* are potentially the first two vertices of the reconstructed facet and are, therefore, stored in the auxiliary list *L*,
k) selecting the vertex *vᵢ* and finding all edges derived from it, which have the *F1* flag set to *OneFacet* and the *F2* flag set to *Unvisited,*
l) searching for an edge *e_{i,k}* which forms the smallest counter-clockwise angle with the edge*_{i,j}* by calculating the angles between edge he edges obtained in step k), wherein the smallest angle defines the next edge of the reconstructed facet,
m) in case facets are not triangles, determining whether the vertex *vₖ* is coplanar with the vertices in the auxiliary list *L*,
n) if the vertex *vₖ* is in the previous step determined as not coplanar with those in *L*, returning to step k); otherwise, the vertex *vₖ* is accepted and inserted it into the list *L*, and the edge *e_{i,k}* becomes edge *e_{i,j}*,
o) returning to step k) until *vₖ* is equal to *v_{end}*, indicating that the facet has been reconstructed,
p) vertices in the auxiliary list L describe the reconstructed facet,
q) setting the *F1* flag to the value *TwoFacets* for all edges determined by vertices in list *L*, and reset all *F2* flags set to the value *Visited* to *Unvisited,*
r) ensuring that the reconstructed facet is oriented correctly, and then insert it into the data structure containing facets,
s) returning to step i) while there are edges with the *F1* flag set to *OneFacet,*
t) storing the reconstructed surface, represented by the polygonal mesh, in an output file using an appropriate writer.

7. The method for reconstructing a 3D geometric surface according to claim 6, wherein the next edge of the reconstructed facet is found by identifying all edges that meet at the vertex *vᵢ* of edge *e_{i,j}*, and that these edges have their *F1* flag set to *OneFacet* and their *F2* flag set to *Unvisited,* and selecting the edge with the smallest angle in counter-clockwise direction in regards to reference edge *e_{i,j}*.

8. The method for reconstructing a 3D geometric surface according to any claim from 6 to 7, wherein the reconstructed facet is oriented such that all its half-edges point in the opposite direction to the half-edges of the neighbouring facets.
